# EUROPEAN PATENT SPECIFICATION

(11) **EP 3 712 745 B1**
(45) Date of publication and mention of the grant of the patent: **15.02.2023**
(21) Application number: 20151601.0
(22) Date of filing: 14.01.2020
(51) Int. Cl.: G06F 1/3234, G03G 15/00, G06F 3/12, G06K 15/00, H04N 1/00

(54) **IMAGE FORMING APPARATUS AND POWER SUPPLY CONTROL METHOD**
BILDERZEUGUNGSGERÄT UND KONTROLLMETHODE FÜR DIE STROMVERSORGUNG
APPAREIL DE FORMATION D'IMAGE ET PROCÉDÉ DE CONTRÔLE DE FOURNITURE DE PUISSANCE

(30) Priority: 20.03.2019 US 201916358833
(43) Date of publication of application: 23.09.2020
(73) Proprietor: Toshiba TEC Kabushiki Kaisha, Shinagawa-ku Tokyo 141-8562 (JP)
(72) Inventor: Marunouchi, Atsushi, Shinagawa-ku, Tokyo 141-8562 (JP)
(74) Representative: Bandpay & Greuter

(56) References cited:
- EP-A1- 2 958 310
- EP-A1- 3 115 884
- US-A1- 2009 144 573
- US-A1- 2012 246 502
- US-A1- 2012 262 751
- US-A1- 2014 072 323
- US-A1- 2015 022 840

## Description

### FIELD

Embodiments described herein relate generally to an image forming apparatus and a power supply control method.

### BACKGROUND

In the related art, an image forming apparatus that has a function of a Super-Sleep mode for power saving is disclosed. This image forming apparatus has a function of automatically waking up when receiving a packet from a network in the Super-Sleep mode. This function is not valid in response to the reception of any packet but is valid only when the received packet is a packet of print data. Accordingly, in the image forming apparatus, it is necessary to determine whether or not the received packet is the packet of print data. However, in the related art, data of a packet cannot be verified until various hardware components (HWs) (memory, auxiliary storage device, application specific integrated unit (ASIC), central processing unit (CPU)) wake up. Therefore, warm-up cannot start until various kinds of HWs wake up, and the start of printing may be delayed by the time required for various HWs to wake up. US 2009/144573 A1 discloses an image forming apparatus. To this end, there is provided an apparatus, a method and a network according to the appended claims.

### BRIEF DESCRIPTION OF THE DRAWINGS

FIG. 1 is a diagram illustrating a configuration of a power supply control system according to an embodiment;
FIG. 2 is a block diagram illustrating a hardware configuration of an information processing apparatus;
FIG. 3 is a diagram illustrating an example of data of a packet generated by the information processing apparatus;
FIG. 4 is a block diagram illustrating a hardware configuration of an image forming apparatus;
FIG. 5 is a sequence diagram illustrating a processing flow of a previous setting when the power supply control system shifts to a Sleep mode; and
FIG. 6 is a sequence diagram illustrating a processing flow of waking up the power supply control system from a Super-Sleep mode.

### DETAILED DESCRIPTION

Hereinafter, the image forming apparatus and the power supply control method according to the embodiment will be described.

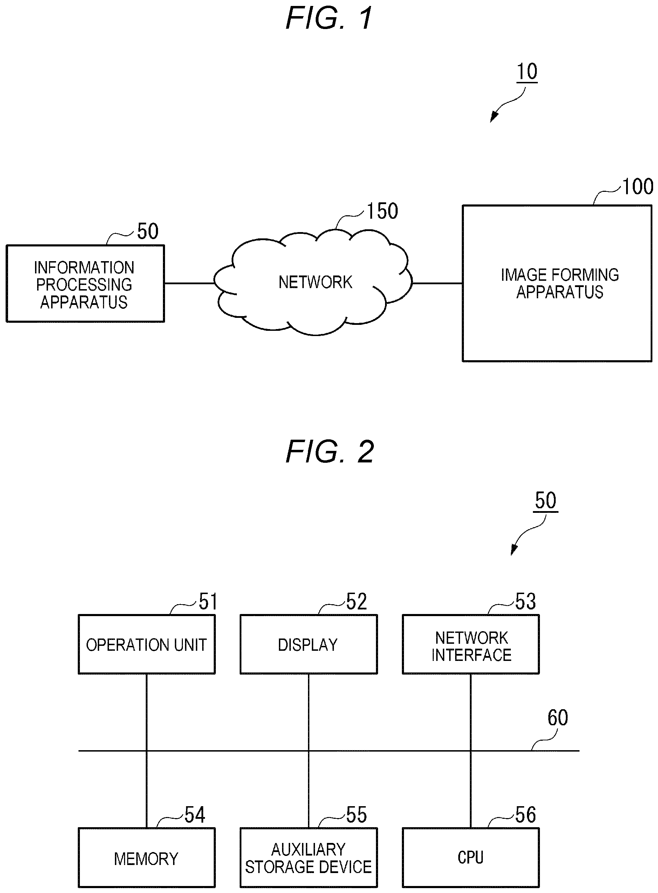

FIG. 1 is a diagram illustrating a configuration of a power supply control system 10 according to the embodiment.

The power supply control system 10 includes an information processing apparatus 50 and an image forming apparatus 100. The information processing apparatus 50 and the image forming apparatus 100 are communicatively connected to each other through a network 150. The network 150 may be a network having any configuration. Examples of the network 150 include a wireless local area network (LAN) and the Internet.

The information processing apparatus 50 generates a packet to be transmitted to the image forming apparatus 100 in response to an operation of a user. For example, when a print instruction is received from the user, the information processing apparatus 50 generates a packet including print data . At this time, the information processing apparatus 50 generates the packet by setting a specific character string (hereinafter, referred to as "print character string") indicating that the packet is a print instruction to a portion close to the beginning of the packet. The portion close to the beginning of the packet refers to a portion closer to the beginning than actual data indicating a print target. The specific information indicating that the packet is the print instruction is not limited to a character string and may be information of a code. The information processing apparatus 50 is configured using an information processing apparatus such as a personal computer, a laptop computer, a tablet terminal, or a smartphone.

The image forming apparatus 100 is a multi-function peripheral (MFP) that can read a sheet and can form a toner image on a sheet. The sheet may be, for example, paper on which an original document, a character, an image, or the like is printed.

The image forming apparatus 100 has a function of a Super-Sleep mode. The Super-Sleep mode is an example of a power saving mode. The Super-Sleep mode is a mode that realizes power saving. The image forming apparatus 100 is controlled as follows in the Super-Sleep mode.
· Stops supplying power to an image reading device, the printer unit, and the like
· Continues to supply power to a main memory and holds a state of the main memory
• Stops power supply to an auxiliary storage device
• Shifts a CPU to a Deep-Sleep mode

The Deep-Sleep mode is a mode in which the voltage is reduced to a minimum value required to operate the CPU.

When the image forming apparatus 100 operates in the Super-Sleep mode, the image forming apparatus 100 controls wake-up of the printer unit based on the character string of a specific portion included in the packet. The image forming apparatus 100 compares the character string of the specific portion to a pre-stored character string and, when the character strings match with each other, wakes up the printer unit including a fixing unit before system wake-up. The pre-stored character string includes at least the print character string. Here, "before system wake-up" represents "before all the functional units of the image forming apparatus 100 wake up from the Super-Sleep mode".

For example, the pre-stored character string may be the print character string. For example, when a packet to be transmitted from the information processing apparatus 50 includes the print character string, the pre-stored character string may be the same as a character string ranging from the beginning of the packet to the print character string. This way, when the packet transmitted from the information processing apparatus 50 is the print instruction, the image forming apparatus 100 wakes up the printer unit before waking up all the operating systems (OS).

The image forming apparatus 100 compares the character string of the specific portion to the pre-stored character string and, when the character strings do not match with each other, does not wake up the printer unit. That is, when the packet to be transmitted from the information processing apparatus 50 does not include the print character string, the image forming apparatus 100 does not wake up the printer unit. The case where the packet does not include the print character string may be, for example, a case where the packet includes a character string indicating Hold printing to be stored in a main body or a character string indicating an input to a Box. The image forming apparatus 100 also does not wake up the printer unit when accessed to a port for setting.

FIG. 2 is a block diagram illustrating a hardware configuration of the information processing apparatus 50.

The information processing apparatus 50 includes an operation unit 51, a display 52, a network interface 53, a memory 54, an auxiliary storage device 55, and a CPU 56. The respective functional units are connected to each other through a system bus 60 to be capable of data communication.

The operation unit 51 receives the operation of the user. The operation unit 51 outputs a signal corresponding to the operation input by the user to the CPU 56. The operation unit 51 may be configured as a touch panel integrated with the display 52.

The display 52 is an image display device such as a liquid crystal display or an organic electro luminescence (EL) display. The display 52 displays various information related to the information processing apparatus 50. The display 52 outputs a signal corresponding to the operation input by the user to the CPU 56.

The network interface 53 transmits and receives data to and from another apparatus. Here, the other apparatus is, for example, the image forming apparatus 100. The network interface 53 operates as an input interface and receives data or an instruction transmitted from the other apparatus. The network interface 53 operates as an output interface and transmits the packet to the other apparatus.

The memory 54 temporarily stores data used in each of the functional units included in the information processing apparatus 50. The memory 54 is, for example, a RAM. The memory 54 may temporarily store a packet as a transmission target.

The auxiliary storage device 55 is, for example, a hard disk or a solid state drive (SSD) and stores various data. The various data includes, for example, a software program and image information. The software program is, for example, a program of a software such as an OS or a printer driver.

The CPU 56 controls the operations of various functional units of the information processing apparatus 50. The CPU 56 loads the software program stored in the auxiliary storage device 55 on the memory 54 and executes the software program to execute the process. For example, when the instruction input through the operation unit 51 is the print instruction, the printer driver generates a packet by setting the print character string to a portion close to the beginning of the packet.

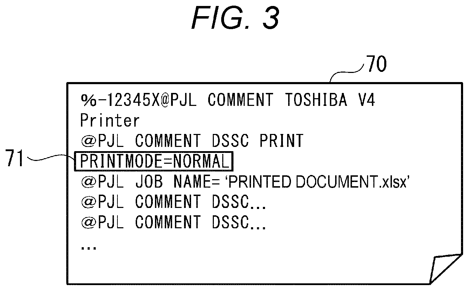

FIG. 3 is a diagram illustrating an example of data of a packet 70 generated by the information processing apparatus 50.

The data of the packet 70 illustrated in FIG. 3 is data of a packet generated when the print instruction is given. When the print instruction is given, a character string "PRINTMODE=NORMAL" is set as shown in a region 71. In the case of Hold printing, the character string shown in the region 71 becomes a character string "PRINTMODE=HOLD". When the instruction indicating an input to the Box is given, the character string shown in the region 71 becomes a character string "PRINTMODE=BOX".

The character string from the beginning of the packet 70 to the character string indicating the print mode (for example, "PRINTMODE=***") is a target for comparison to the pre-stored character string. In FIG. 3, the image forming apparatus 100 compares the following character string to the pre-stored character string.
"%-12345X@PJL COMMENT TOSHIBA V4 Printer¥n@PJL COMMENT DSSC PRINT PRINTMODE=NORMAL"

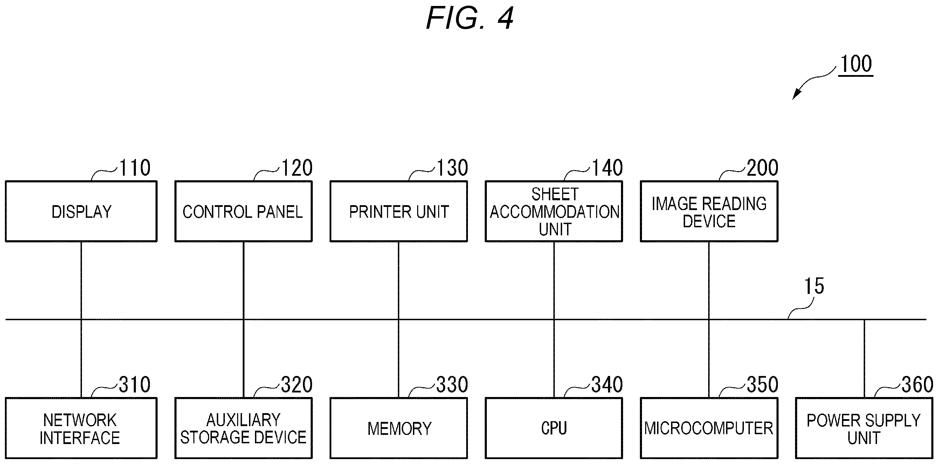

FIG. 4 is a block diagram illustrating a hardware configuration of the image forming apparatus 100.

The image forming apparatus 100 includes a display 110, a control panel 120, a printer unit 130, a sheet accommodation unit 140, an image reading device 200, a network interface 310, an auxiliary storage device 320, a memory 330, a CPU 340, a microcomputer 350, and a power supply unit 360. The respective functional units are connected to each other through a system bus 15 to be capable of data communication.

The display 110 is an image display device such as a liquid crystal display or an organic EL display. The display 110 displays various information related to the image forming apparatus 100. The display 110 outputs a signal corresponding to the operation input by the user to the CPU of the image forming apparatus 100. The display 110 receives the operation of the user.

The control panel 120 includes a plurality of buttons. The control panel 120 receives the operation of the user. The control panel 120 outputs a signal corresponding to the operation input by the user to the CPU of the image forming apparatus 100. The display 110 and the control panel 120 may be integrated into a touch panel.

The printer unit 130 executes an image forming process. In the image forming process, the printer unit 130 forms an image on a sheet based on image information generated by the image reading device 200 or image information received through a communication path. The printer unit 130 includes an image forming unit and a fixing unit.

The sheet accommodation unit 140 accommodates sheets to be used for forming image in the printer unit 130.

The image reading device 200 reads an image of a reading target in the form of brightness of light. For example, the image reading device 200 reads an image that is printed on the sheet of the reading target set on an original document reading mount. The image reading device 200 records the read image information. The recorded image information may be transmitted to another information processing apparatus through the network. Based on the recorded image information, the printer unit 130 may form an image on the sheet.

The network interface 310 transmits and receives data to and from another apparatus. Here, the other apparatus is, for example, the information processing apparatus 50. The network interface 310 operates as an input interface and receives data or an instruction transmitted from the other apparatus. Examples of an instruction to be transmitted from the other apparatus include a print execution instruction and an image information storage instruction. The network interface 310 operates as an output interface and transmits data to the other apparatus.

The auxiliary storage device 320 is, for example, a hard disk or a solid state drive (SSD) and stores various data. The various data includes, for example, a software program, digital data, a job, and a job log. The software program is, for example, a program of a software such as an OS, a device driver, or a network system manager (NSM). The NSM is a software for managing the network.

The memory 330 temporarily stores data used in each of the functional units included in the image forming apparatus 100. The memory 330 is, for example, a RAM. The memory 330 may store the digital data generated by the image reading device 200. The memory 330 may temporarily store any one of the job and the job log.

The CPU 340 controls the operations of various functional units of the image forming apparatus 100. The CPU 340 loads the software program stored in the auxiliary storage device 320 on the memory 330 and executes the software program to execute the process. Here, an example of a specific process of the CPU 340 will be described. When a condition of shifting to the Super-Sleep mode is satisfied, the CPU 340 shifts the mode of the apparatus from the normal mode to the Super-Sleep mode. For example, when a predetermined time instruction is not input or when a predetermined time zone is reached, the CPU 340 determines that the condition of shifting to the Super-Sleep mode is satisfied. The CPU 340 is an aspect of the first controller.

When a specific character string indicating the print job is described in the packet received in the Super-Sleep mode, the microcomputer 350 performs a power supply control on the printer unit 130. The microcomputer 350 includes a memory or an auxiliary storage device. The auxiliary storage device of the microcomputer 350 stores a firmware software program of a network interface card (NIC) or a character string as a target for comparison. The microcomputer 350 loads the firmware software program stored in the auxiliary storage device on the memory and executes the software program to execute the process. The microcomputer 350 uses less power than the CPU 340. The microcomputer 350 is an aspect of the second controller.

Here, an example of a specific process of the microcomputer 350 will be described. The microcomputer 350 compares the character string of the specific portion to the pre-stored character string and, when the character strings match with each other, performs the power supply control on the printer unit 130. More specifically, the microcomputer 350 wakes up the printer unit 130 before the system wake-up by performing the power supply control on the printer unit 130 before performing the power supply control on the CPU 340.

The power supply unit 360 is connected to a commercial power supply and supplies power from the commercial power supply to each of the functional units. For example, the power supply unit 360 supplies power to each of the functional units in the normal mode. The power supply unit 360 supplies a minimum necessary amount of power for operation to the CPU 340 in the Super-Sleep mode. The power supply unit 360 stops the power supply to the printer unit 130, the image reading device 200, and the auxiliary storage device 320 in the Super-Sleep mode. Here, the reason why the minimum necessary amount of power for operation is supplied to the CPU 340 is that an amount of power for operating the CPU 340 in the Deep-Sleep mode is required. The power supply unit 360 supplies power according to the control of the CPU 340. Regardless of any mode, the power supply unit 360 supplies power to the memory 330, the microcomputer 350, and the network interface 310.

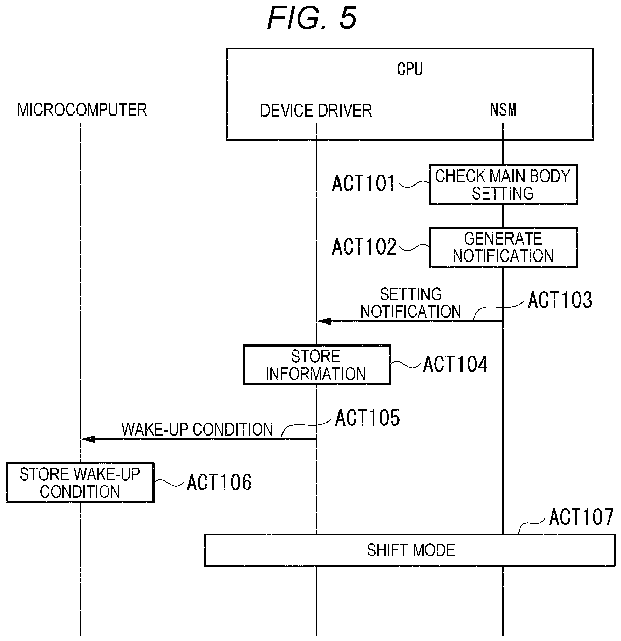

FIG. 5 is a sequence diagram illustrating a processing flow of a previous setting when the power supply control system 10 is shifted to the Sleep mode. The process illustrated in FIG. 5 is executed when the condition of shifting to the Super-Sleep mode is satisfied.

The NSM that is operating on the CPU 340 checks a setting of a main body (ACT 101). Specifically, when a user authentication setting is ON as a setting of the apparatus, the NSM checks, for example, a setting in which the printer unit 130 does not wake up before the system wake-up. Next, after the setting check, the NSM generates a setting notification including the result of the setting check and a wake-up condition for waking up the apparatus from the Super-Sleep mode (ACT 102).

The wake-up condition is that the packet is received from a printer port. The wake-up condition may be set in advance and stored in the auxiliary storage device 320. For example, the result of the setting check is information indicating whether the power supply to the printer unit 130 before the system wake-up is valid or invalid. The NSM outputs the generated setting notification to the device driver (ACT 103) .

The device driver acquires the setting notification output from the NSM. The device driver stores the result of the setting check and the wake-up condition included in the acquired setting notification (ACT 104). Next, the device driver notifies the wake-up condition to the microcomputer 350 (ACT 105). The microcomputer 350 stores the wake-up condition output from the device driver in the memory (ACT 106).

Next, the image forming apparatus 100 shifts to the Super-Sleep mode (ACT 107). Specifically, first, the CPU 340 controls the power supply unit 360 to stop power supply to the printer unit 130, the image reading device 200, and the auxiliary storage device 320. Next, the CPU 340 controls the power supply unit 360 such that the amount of power supplied to the apparatus is an amount only enough for operating the apparatus in the Deep-Sleep mode.

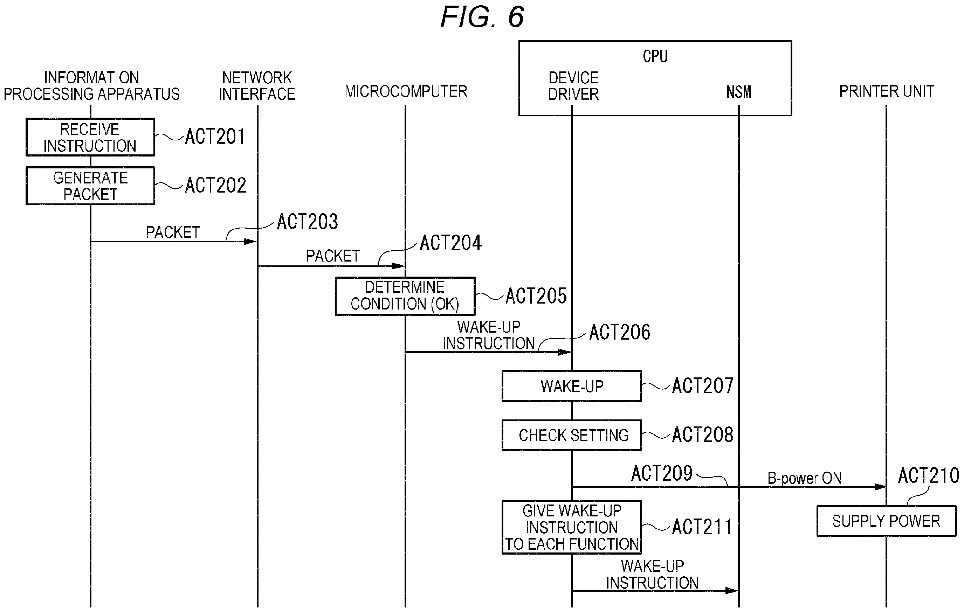

FIG. 6 is a sequence diagram illustrating a processing flow of waking up the power supply control system 10 from the Super-Sleep mode. It is assumed that the image forming apparatus 100 is in the Super-Sleep mode when the process of FIG. 6 starts.

When an instruction is received from the user (ACT 201), the operation unit 51 of the information processing apparatus 50 outputs the received instruction to the CPU 56. The CPU 56 analyzes the instruction input through the operation unit 51. Specifically, the CPU 56 analyzes whether the input instruction is the print instruction or another instruction. Here, it is assumed that the input instruction is the print instruction.

In this case, the CPU 56 generates a packet including the print character string (ACT 202). At this time, the printer driver of the CPU 56 generates the packet by setting the print character string to a portion close to the beginning of the packet. Here, it is assumed that the printer driver generates the packet 70 illustrated in FIG. 3. The printer driver transmits the packet to the image forming apparatus 100 through the network interface 53 (ACT 203).

The network interface 310 of the image forming apparatus 100 receives the packet transmitted from the information processing apparatus 50. The network interface 310 outputs the received packet to the microcomputer 350 (ACT 204). The microcomputer 350 determines whether the stored wake-up condition is satisfied based on the packet output from the network interface 310 (ACT 205). Specifically, when the packet is received from the printer port (for example, Port 9100), the microcomputer 350 determines that the wake-up condition is satisfied. On the other hand, when the packet is received from a port other than the printer port (for example, Port 9100), the microcomputer 350 determines that the wake-up condition is not satisfied. When the wake-up condition is satisfied, the microcomputer 350 checks the content of the packet. On the other hand, when the wake-up condition is not satisfied, the microcomputer 350 deletes or temporarily stores the packet. Here, it is assumed that the wake-up condition is satisfied.

Since the wake-up condition is satisfied, the microcomputer 350 subsequently extracts a character string from the beginning to a character string indicating the print mode from the character string included in the packet. In this case, the microcomputer 350 extracts the following character string.
"%-12345X@PJL COMMENT TOSHIBA V4 Printer¥n@PJL COMMENT DSSC PRINT PRINTMODE=NORMAL"

Next, the microcomputer 350 acquires a character string as a target for comparison that is stored in the auxiliary storage device included in the microcomputer 350. Here, the character string as a target for comparison is as follows.
"%-12345X@PJL COMMENT TOSHIBA V4 Printer¥n@PJL COMMENT DSSC PRINT PRINTMODE=NORMAL"

Next, the microcomputer 350 compares the character string extracted from the packet to the character string as the target for comparison. In the above example, the character strings match with each other. In this case, the microcomputer 350 outputs a wake-up instruction as an interrupt instruction to the device driver of the CPU 340 (ACT 206). As a result, the device driver wakes up from the Deep-Sleep mode (ACT 207) . At this time, only the minimum necessary amount of power is supplied to the CPU 340, and the NSM or the OS does not wake up. The power supply from the power supply unit 360 to the printer unit 130, the image reading device 200, and the auxiliary storage device 320 is stopped.

The device driver checks the setting notified at the setting notification (ACT 208) . At this time, when the wake-up of the printer unit 130 before the system wake-up is invalid, the device driver wakes up the system before waking up the printer unit 130. Specifically, first, the device driver starts power supply from the power supply unit 360 to the image reading device 200, the auxiliary storage device 320, and the CPU 340. Next, the device driver wakes up the OS and wakes up various HW such as ASIC or the auxiliary storage device 320. Next, the device driver wakes up the printer unit 130 by starting power supply from the power supply unit 360 to the printer unit 130.

On the other hand, when the wake-up of the printer unit 130 before the system wake-up is valid, the device driver wakes up the printer unit 130 before the system wake-up. Specifically, the device driver sets a B-Power port for restarting power supply to the fixing unit of the printer unit 130 to ON (ACT 209) . As a result, the device driver supplies power from the power supply unit 360 to the printer unit 130. That is, power is supplied to the fixing unit of the printer unit 130 (ACT 210). In the process of FIG. 6, it is assumed that the wake-up of the printer unit 130 before the system wake-up is set to be valid in ACT 208.

The device driver sets the B-Power port to ON and then gives a wake-up instruction to each of the functions (ACT 211) . Specifically, first, the device driver starts power supply from the power supply unit 360 to the image reading device 200, the auxiliary storage device 320, and the CPU 340. Next, the device driver wakes up the OS and wakes up various HW such as ASIC or the auxiliary storage device 320. As a result, the CPU 340 shifts the mode of the apparatus from the Super-Sleep mode to the normal mode. Next, the printer unit 130 prints print data.

With the power supply control system 10 having the above-described configuration, the time until printing can be reduced when compared to the related art. Specifically, only when a specific event occurs, the image forming apparatus 100 sets the timing of power supply to the fixing unit of the printer unit 130 before the system wake-up. As a result, power is supplied to the fixing unit of the printer unit 130 even while the system is waking up. Accordingly, a lamp included in the fixing unit can be rapidly heated. Therefore, the time until printing can be reduced.

More specifically, in the image forming apparatus 100, the microcomputer 350 determines the specific character string included in the packet. When the predetermined character string matches with the specific character string included in the packet, the image forming apparatus 100 restarts power supply to the printer unit 130 before the system wake-up. Accordingly, it is not necessary to analyze detailed data in the packet unlike the related art. Therefore, the type of the packet can be discriminated with a simple method.

Hereinafter, a modification example of the power supply control system 10 will be described.

The microcomputer 350 may be incorporated into the network interface 310.

The printer driver of the information processing apparatus 50 may generate the packet by setting a character string indicating the wake-up of the printer unit 130 instead of or in addition to the print character string. In this configuration, when the packet includes the character string indicating the wake-up of the printer unit 130, the microcomputer 350 performs the power supply control on the printer unit 130.

The printer driver of the information processing apparatus 50 may generate the packet by setting a character string indicating a user name instead of or in addition to the print character string. In this configuration, the microcomputer 350 compares the character string of the specific portion to the pre-stored character string and, when the character strings match with each other, gives the notification to the device driver. At this time, the notification output from the microcomputer 350 includes the character string described in the packet. The device driver extracts the character string indicating the user name from the character string included in the notification output from the microcomputer 350. Next, the device driver compares the extracted character string to a character string described in a list in which a pre-stored character string indicating a user name is described. When the extracted character string matches with the character string described in the list, the device driver supplies power from the power supply unit 360 to the printer unit 130.

The image forming apparatus 100 according to at least one of the above-described embodiments includes the printer unit 130, the CPU 340, the power supply unit 360, and the microcomputer 350. The printer unit 130 forms an image on a sheet. The CPU 340 performs a control of shifting a state of the apparatus from a normal mode to a power saving mode. The power supply unit 360 supplies power to the CPU 340 and the printer unit 130 in the normal mode and supplies power to the CPU 340 and stops power supply to the printer unit 130 in the power saving mode. When the print character string is described in the packet received in the power saving mode, the microcomputer 350 performs the power supply control on the printer unit 130 before performing the power saving mode on the CPU 340. As a result, the time until printing can be reduced.

Some functions of the image forming apparatus 100 in the embodiment may be realized by a computer. In this case, a program for realizing this function is recorded in a computer-readable recording medium. The function may be realized by causing a computer system to read the program recorded in the recording medium and to execute the read program. The definition of "computer system" described herein includes an operating system and a hardware such as a peripheral. The definition of "computer-readable recording medium" includes a portable medium and a storage device. The portable medium is, for example, a flexible disk, a magneto-optic disk, a ROM, or a CD-ROM. The storage device is, for example, a hard disk built into a computer system. The "computer-readable recording medium" dynamically stores a program for a short period of time such as a communication line while a program is being transmitted through a communication line. The communication line is, for example, a network such as the Internet or a telephone line. The "computer-readable recording medium" may be a volatile memory in a computer system that functions as a server or a client. The volatile memory stores a program for a certain period of time. The program may realize a part of the above-described function. The program may realize the above-described function in combination of a program that is recorded in advance in a computer system.

## Claims

1. An image forming apparatus (100), comprising a first controller (340), a second controller (350), a printer unit (130) and a power supply unit (360), wherein:
- the printer unit is configured to form an image on a sheet;
- the first controller is configured to control shifting a state of the apparatus from a normal mode to a power saving mode (ACT107);
- the power supply unit is configured to supply power to the first controller and the printer unit in the normal mode, and to supply a minimum necessary amount of power for operation to the first controller and to stop power supply to the printer unit in the power saving mode;
- the first controller is configured to store setting information indicating whether the wake-up of the printer unit before the wake-up of the first controller is valid (ACT104), before shifting the state of the apparatus from the normal mode to the power saving mode (ACT107) and as a result of checking a user authentication setting (ACT101);
- the first controller is configured to notify a wake-up condition for waking up the apparatus from the power saving mode to the normal mode to the second controller (ACT105), before shifting the state of the apparatus from the normal mode to the power saving mode (ACT107), the wake-up condition being that a packet is received from a printer port;
- the second controller is configured to, when a packet is received in the power saving mode (ACT204), determine whether the wake-up condition is satisfied, and determine whether the packet includes specific information indicating a print job when the wake-up condition is satisfied (ACT205);
- the second controller is configured to give a notification to the first controller that a packet including the specific information is received and the wake-up condition is satisfied (ACT206); and
- the first controller is configured to, in response to the notification and when the setting information is valid (ACT208), supply power from the power supply unit to the printer unit (ACT210) by opening a port for restarting power supply to the printer unit (ACT209), before supplying power to the first controller (ACT211).

2. The apparatus according to claim 1, wherein when the wake-up of the printer unit before the wake-up of the first controller is set to be invalidated, the first controller does not open a port for restarting power supply to the printer unit according to the notification even when receiving the notification.

3. The apparatus according to claim 1 or 2, wherein the second controller determines whether the packet includes the specific information when the packet is received from a port other than a printer port.

4. A power supply control method for controlling a power supply of an image forming apparatus (100) comprising a first controller (340), a second controller (350), a printer unit (130) and a power supply unit (360), the method comprising:
by means of the first controller, controlling shifting a state of an image forming apparatus from a normal mode to a power saving mode (ACT107);
supplying power, by means of the power supply unit, to the first controller and the printer unit for forming an image on a sheet in the normal mode and supplying a minimum necessary amount of power for operation to the first controller and stopping power supply to the printer unit in the power saving mode;
notifying, by means of the first controller, a wake-up condition for waking up the apparatus from the power saving mode to the normal mode to the second controller (ACT105) before shifting the state of the apparatus from the normal mode to the power saving mode, the wake-up condition being that a packet is received from a printer port;
by means of the second controller, when a packet is received in the power saving mode (ACT204), determining whether the wake-up condition is satisfied, and determining whether the packet includes specific information indicating a print job when the wake-up condition is satisfied (ACT205);
by means of the second controller, giving a notification to the first controller that a packet including the specific information is received and the wake-up condition is satisfied (ACT206);
by means of the first controller, storing setting information indicating whether the wake-up of the printer unit before the wake-up of the first controller is valid (ACT104), before shifting the state of the apparatus from the normal mode to the power saving mode (ACT107) and as a result of checking a user authentication setting (ACT101), and
in response to the notification and when the setting information is valid (ACT208) supplying, by means of the first controller, power from the power supply unit to the printer unit (ACT210) by opening a port for restarting power supply to the printer unit (ACT209), before supplying power to the first controller (ACT211).

5. The method according to claim 4, wherein
the wake-up condition includes receipt of the packet from a printer port, further comprising:
determining whether the packet includes the specific information when the packet is received from the printer port.

6. A network, comprising:
at least one computer; and
an image forming apparatus according to claim 1 or 3.

## Patentansprüche

1. Bilderstellungsvorrichtung (100), die eine erste Steuerung (340), eine zweite Steuerung (350), eine Druckereinheit (130) und eine Energieversorgungseinheit (360) umfasst, wobei:
- die Druckereinheit dafür gestaltet ist, ein Bild auf einer Materialbahn zu erstellen,
- die erste Steuerung dafür gestaltet ist, das Ändern eines Zustandes der Vorrichtung von einem Normalmodus in einen Energiesparmodus (ACT107) zu steuern,
- die Energieversorgungseinheit dafür gestaltet ist, die erste Steuerung und die Druckereinheit in dem Normalzustand mit Energie zu versorgen, und in dem Energiesparmodus die erste Steuerung mit einem erforderlichen minimalen Umfang an Energie für den Betrieb zu versorgen und die Energieversorgung für die Druckereinheit einzustellen,
- die erste Steuerung dafür gestaltet ist, Einstellungsinformationen zu speichern, die angeben, ob die Reaktivierung der Druckereinheit vor der Reaktivierung der ersten Steuerung gültig ist (ACT104), bevor der Zustand der Vorrichtung von dem Normalmodus in den Energiesparmodus (ACT107) geändert wird und im Ergebnis des Prüfens einer Benutzerauthentifizierungseinstellung (ACT101),
- die erste Steuerung dafür gestaltet ist, eine Reaktivierungsbedingung zum Reaktivieren der Vorrichtung aus dem Energiesparmodus in den Normalmodus an die zweite Steuerung zu melden (ACT105), bevor der Zustand der Vorrichtung von dem Normalzustand in den Energiesparmodus geändert wird (ACT107), wobei die Reaktivierungsbedingung darin besteht, dass ein Paket von einem Drucker-Port empfangen wird,
- die zweite Steuerung dafür gestaltet ist, wenn ein Paket in dem Energiesparmodus empfangen wird (ACT204), zu bestimmen, ob die Reaktivierungsbedingung erfüllt ist, und zu bestimmen, ob das Paket spezifische Informationen beinhaltet, die einen Druckauftrag angeben, wenn die Reaktivierungsbedingung erfüllt ist (ACT205),
- die zweite Steuerung dafür gestaltet ist, eine Meldung an die erste Steuerung zu geben, dass ein Paket einschließlich der spezifischen Informationen empfangen wird und die Reaktivierungsbedingung erfüllt ist (ACT206), und
- die erste Steuerung dafür gestaltet ist, in Reaktion auf die Meldung und wenn die Einstellungsinformationen gültig sind (ACT208), die Druckereinheit mit Energie von der Energieversorgungseinheit zu versorgen (ACT210), indem ein Port zum Wiederaufnehmen der Energieversorgung für die Druckereinheit geöffnet wird (ACT209), bevor die erste Steuerung mit Energie versorgt wird (ACT211).

2. Vorrichtung nach Anspruch 1, wobei,
wenn die Reaktivierung der Druckereinheit vor der Reaktivierung der ersten Steuerung als ungültig gemacht eingestellt ist, die erste Steuerung keinen Port für das Wiederaufnehmen der Energieversorgung für die Druckereinheit gemäß der Meldung öffnet, auch wenn sie die Meldung erhält.

3. Vorrichtung nach Anspruch 1 oder 2, wobei
die zweite Steuerung bestimmt, ob das Paket die spezifischen Informationen beinhaltet, wenn das Paket von einem anderen Port als einem Drucker-Port empfangen wird.

4. Energieversorgungs-Steuerverfahren zum Steuern einer Energieversorgung einer Bilderstellungsvorrichtung (100), die eine erste Steuerung (340), eine zweite Steuerung (350), eine Druckereinheit (130) und eine Energieversorgungseinheit (360) umfasst, wobei das Verfahren Folgendes umfasst:
mittels der ersten Steuerung Steuern des Änderns eines Zustandes einer Bilderstellungsvorrichtung von einem Normalmodus in einen Energiesparmodus (ACT107),
mittels der Energieversorgungseinheit Versorgen der ersten Steuerung und der Druckereinheit mit Energie zum Erstellen eines Bildes auf einer Materialbahn in dem Normalzustand und Versorgen der ersten Steuerung mit einem erforderlichen minimalen Umfang an Energie für den Betrieb und Einstellen der Energieversorgung für die Druckereinheit in dem Energiesparmodus,
mittels der ersten Steuerung Melden einer Reaktivierungsbedingung zum Reaktivieren der Vorrichtung aus dem Energiesparmodus in den Normalmodus an die zweite Steuerung (ACT105), bevor der Zustand der Vorrichtung von dem Normalmodus in den Energiesparmodus geändert wird, wobei die Reaktivierungsbedingung darin besteht, dass ein Paket von einem Drucker-Port empfangen wird,
mittels der zweiten Steuerung, wenn ein Paket in dem Energiesparmodus empfangen wird (ACT204), Bestimmen, ob die Reaktivierungsbedingung erfüllt ist, und Bestimmen, ob das Paket spezifische Informationen beinhaltet, die einen Druckauftrag angeben, wenn die Reaktivierungsbedingung erfüllt ist (ACT205),
- mittels der zweiten Steuerung Geben einer Meldung an die erste Steuerung, dass ein Paket einschließlich der spezifischen Informationen empfangen wird und die Reaktivierungsbedingung erfüllt ist (ACT206),
- mittels der ersten Steuerung Speichern von Einstellungsinformationen, die angeben, ob das Reaktivieren der Druckereinheit vor dem Reaktivieren der ersten Steuerung gültig ist (ACT104), bevor der Zustand der Vorrichtung von dem Normalmodus in den Energiesparmodus geändert wird (ACT107) und im Ergebnis des Prüfens einer Benutzerauthentifizierungseinstellung (ACT101), und
in Reaktion auf die Meldung und wenn die Einstellungsinformationen gültig sind (ACT208), Versorgen der Druckereinheit mit Energie von der Energieversorgungseinheit (ACT210) mittels der ersten Steuerung, indem ein Port zum Wiederaufnehmen der Energieversorgung für die Druckereinheit geöffnet wird (ACT209), bevor die erste Steuerung mit Energie versorgt wird (ACT211).

5. Verfahren nach Anspruch 4, wobei
die Reaktivierungsbedingung den Empfang des Pakets von einem Drucker-Port beinhaltet, ferner umfassend:
Bestimmen, ob das Paket die spezifischen Informationen beinhaltet, wenn das Paket von dem Drucker-Port empfangen wird.

6. Netzwerk, umfassend:
mindestens einen Computer und
eine Bilderstellungsvorrichtung nach Anspruch 1 oder 3.

## Revendications

1. Appareil de formation d'image (100), comprenant un premier contrôleur (340), un second contrôleur (350), une unité d'imprimante (130) et une unité d'alimentation électrique (360), dans lequel :
- l'unité d'imprimante est configurée de manière à former une image sur une feuille ;
- le premier contrôleur est configuré de manière à commander le passage d'un état de l'appareil, d'un mode normal à un mode d'économie d'énergie (ACT107) ;
- l'unité d'alimentation électrique est configurée de manière à fournir de l'énergie au premier contrôleur et à l'unité d'imprimante dans le mode normal, et à fournir une quantité minimale d'énergie nécessaire au fonctionnement, au premier contrôleur, et à mettre fin à la fourniture d'énergie à l'unité d'imprimante dans le mode d'économie d'énergie ;
- le premier contrôleur est configuré de manière à stocker des informations de paramétrage indiquant si le réveil de l'unité d'imprimante avant le réveil du premier contrôleur est valide (ACT104), avant de faire passer l'état de l'appareil, du mode normal au mode d'économie d'énergie (ACT107), et suite à la vérification d'un paramètre d'authentification d'utilisateur (ACT101) ;
- le premier contrôleur est configuré de manière à notifier une condition de réveil, pour réveiller l'appareil en le faisant passer du mode d'économie d'énergie au mode normal, au second contrôleur (ACT1 05), avant de faire passer l'état de l'appareil, du mode normal au mode d'économie d'énergie (ACT107), la condition de réveil étant qu'un paquet est reçu en provenance d'un port d'imprimante ;
- le second contrôleur est configuré de manière à, lorsqu'un paquet est reçu dans le mode d'économie d'énergie (ACT204), déterminer si la condition de réveil est satisfaite, et déterminer si le paquet inclut des informations spécifiques indiquant une tâche d'impression lorsque la condition de réveil est satisfaite (ACT205) ;
- le second contrôleur est configuré de manière à notifier, au premier contrôleur, qu'un paquet incluant les informations spécifiques est reçu et que la condition de réveil est satisfaite (ACT206) ; et
- le premier contrôleur est configuré de manière à, en réponse à la notification et lorsque les informations de paramétrage sont valides (ACT208), fournir de l'énergie, de l'unité d'alimentation électrique à l'unité d'imprimante (ACT210), en ouvrant un port pour redémarrer la fourniture d'énergie à l'unité d'imprimante (ACT209), avant de fournir de l'énergie au premier contrôleur (ACT211).

2. Appareil selon la revendication 1, dans lequel :
lorsque le réveil de l'unité d'imprimante avant le réveil du premier contrôleur est paramétré pour être invalidé, le premier contrôleur n'ouvre pas un port pour redémarrer la fourniture d'énergie à l'unité d'imprimante selon la notification, y compris lors de la réception de la notification.

3. Appareil selon la revendication 1 ou 2, dans lequel :
le second contrôleur détermine si le paquet inclut les informations spécifiques lorsque le paquet est reçu en provenance d'un port autre qu'un port d'imprimante.

4. Procédé de commande de fourniture d'énergie pour commander l'alimentation en énergie d'un appareil de formation d'image (100) comprenant :
un premier contrôleur (340), un second contrôleur (350), une unité d'imprimante (130) et une unité d'alimentation électrique (360), le procédé comprenant les étapes ci-dessous consistant à :
au moyen du premier contrôleur, commander le passage d'un état d'un appareil de formation d'image, d'un mode normal à un mode d'économie d'énergie (ACT107) ;
fournir de l'énergie, au moyen de l'unité d'alimentation électrique, au premier contrôleur et à l'unité d'imprimante, pour former une image sur une feuille dans le mode normal et fournir une quantité minimale d'énergie nécessaire au fonctionnement, au premier contrôleur, et mettre fin à la fourniture d'énergie, à l'unité d'imprimante, dans le mode d'économie d'énergie ;
notifier, au moyen du premier contrôleur, une condition de réveil pour réveiller l'appareil en le faisant passer du mode d'économie d'énergie au mode normal, au second contrôleur (ACT105), avant de faire passer l'état de l'appareil, du mode normal au mode d'économie d'énergie, la condition de réveil étant qu'un paquet est reçu en provenance d'un port d'imprimante ;
au moyen du second contrôleur, lorsqu'un paquet est reçu dans le mode d'économie d'énergie (ACT204), déterminer si la condition de réveil est satisfaite, et déterminer si le paquet inclut des informations spécifiques indiquant une tâche d'impression lorsque la condition de réveil est satisfaite (ACT205) ;
au moyen du second contrôleur, notifier, au premier contrôleur, qu'un paquet incluant les informations spécifiques est reçu, et que la condition de réveil est satisfaite (ACT206) ;
au moyen du premier contrôleur, stocker des informations de paramétrage indiquant si le réveil de l'unité d'imprimante avant le réveil du premier contrôleur est valide (ACT104), avant de faire passer l'état de l'appareil, du mode normal au mode d'économie d'énergie (ACT107), et suite à la vérification d'un paramètre d'authentification d'utilisateur (ACT101) ; et
en réponse à la notification et lorsque les informations de paramétrage sont valides (ACT208), fournir, au moyen du premier contrôleur, de l'énergie, de l'unité d'alimentation électrique à l'unité d'imprimante (ACT210), en ouvrant un port en vue de redémarrer la fourniture d'énergie à l'unité d'imprimante (ACT209), avant de fournir de l'énergie au premier contrôleur (ACT211).

5. Procédé selon la revendication 4, dans lequel :
la condition de réveil inclut la réception du paquet en provenance d'un port d'imprimante, le procédé comprenant en outre l'étape ci-dessous consistant à :
déterminer si le paquet inclut les informations spécifiques lorsque le paquet est reçu en provenance du port d'imprimante.

6. Réseau, comprenant :
au moins un ordinateur ; et
un appareil de formation d'image selon la revendication 1 ou 3.
